# EUROPÄISCHE PATENTANMELDUNG

(11) **EP 1 768 349 A1**
(43) Veröffentlichungstag der Anmeldung: **28.03.2007**
(21) Anmeldenummer: 06118583.1
(22) Anmeldetag: 08.08.2006
(51) Int. Cl.: H04L 29/08

(54) **Bidirektionale asynchrone Datenkommunikation**

(30) Priorität: 22.09.2005 DE 102005045346
(71) Anmelder: SIEMENS AKTIENGESELLSCHAFT, 80333 München (DE)
(72) Erfinder: Volkmann, Frank, 90475, Nürnberg (DE); Deiretsbacher, Karl-Heinz, 91090, Effeltrich (DE); Hock, Christian, 90763, Fürth (DE)

(57) **Zusammenfassung**

Die Erfindung betrifft ein Verfahren zur bidirektionalen asynchronen Datenkommunikation zwischen einem Client und einem Server über ein Datennetz, insbesondere Internet, mittels eines auf einem Request/Response-Paradigma basierenden Hypertext-Transfer-Protokolls. Aufgabe der Erfindung ist es, unter Zuhilfenahme eines einzigen Kommunikationskanals eine vom Client initiierte Kommunikation zu etablieren, über die beide Partner asynchron bidirektional Daten austauschen können. Diese Aufgabe wird dadurch gelöst, dass, nachdem der Client die Verbindung mittels eines Requests etabliert hat, der Client Daten als weitere Requests zum Server schickt, während der Server Daten als Response auf den letzten Request an den Client schickt. Hat der Server keine Daten zu senden, so sendet er nach einer Timeout-Zeit eine Dummy-Response zum Offenhalten des Kanals. Erhält der Server einen neuen Request, so beendet er den alten und sendet eventuell noch zu sendende Daten als Antwort auf den neuen Request. Auf diese Weise ist immer ein und nur ein Request offen, als dessen Antwort der Server Daten an den Client senden kann, so dass somit auch bei auf dem Request/Response-Paradigma basierenden Protokollen eine bidirektionale Kommunikation auf einem Kanal möglich ist.

## Beschreibung

Die Erfindung betrifft ein Verfahren zur bidirektionalen asynchronen Datenkommunikation, die, von einem Client initiiert, zwischen dem Client und einem Server etabliert wird, über ein Datennetz, insbesondere Internet, mittels eines auf einem Request/Response-Paradigma basierenden Hypertext-Transfer-Protokolls. Die Erfindung betrifft ferner ein Programm zur Ausführung eines derartigen Verfahrens sowie ein System aus zumindest einem Client und einem Server, die zur bidirektionalen asynchronen Datenkommunikation vorgesehen sind.

Ein derartiges Verfahren kommt in allen Datennetzen zum Einsatz, in denen eine bidirektionale Kommunikation zwischen einem Client und einem Server gefordert ist und das zur Verfügung stehende Übertragungsprotokoll auf einem Request /Response-Paradigma basiert. Ein derartiges Übertragungsprotokoll ist beispielsweise das Hypertext-Transfer-Protokoll HTTP des Internet-Dienstes World Wide Web (WWW), bei dem der Client nur auf Anfrage (Request) Daten vom Server als Antwort (Response) erhält. Das WWW ist demzufolge ein Pull-Medium, d.h. der Client "zieht" sich Inhalte durch Anforderung, der Server hat keine Möglichkeit, von sich aus Daten an den Client zu senden. Diese Möglichkeit, der sogenannte Server-Push, ist hingegen bei Internet-Diensten wie Online-Chats notwendig, wird aber von HTTP nach wie vor nicht unterstützt. Bestrebungen in der Vergangenheit, HTTP in diese Richtung zu erweitern (vgl. z.B. HTTP-NG), sind nicht zuletzt an Sicherheitsbedenken gescheitert.

Die Aufgabe, bidirektional, d.h. von beiden Seiten unabhängig, Datenkommunikation zu betreiben, ist in der Automatisierungstechnik fundamental - beispielsweise zum Weiterleiten von Alarmen oder Events, Wertänderungen etc. Unter der Maßgabe, im WWW zu kommunizieren, ist die einzige Möglichkeit, die Anforderung nach einer bidirektionalen Kommunikation zu erfüllen, diese derart im HTTP zu "tunneln", dass eine in der Kommunikationsstrecke vorhandene Firewall oder ein Proxy-Server diese nicht erkennen und verhindern kann. Im WWW besteht nicht die Möglichkeit, auf die in der Kommunikationsstrecke vorhandenen Komponenten, wie z.B. der Firewall eines Internet Service Providers, Einfluss zu nehmen. Daher muss eine Kommunikation mit den minimalen Mechanismen auskommen, die im WWW angeboten werden. Dies bedeutet ausschließlich HTTP-Kommunikation über Port 80.

Aus DE 199 04 331 C1 ist ein Verfahren bekannt, das unter Zuhilfenahme von zwei HTTP-Kanälen eine vom Client initiierte Kommunikation etabliert, über die beide Partner asynchron bidirektional Daten austauschen können.

Der Erfindung liegt die Aufgabe zugrunde, das bekannte Verfahren dahingehend zu verbessern, dass für die Kommunikation nur noch ein Kommunikationskanal erforderlich ist.

Diese Aufgabe wird durch ein Verfahren der eingangs genannten Art dadurch gelöst, dass
- der Client mittels eines Requests einen Kommunikationskanal aufbaut,
- der Server, falls er Daten zu senden hat, diese Daten als Response auf den Client-Request in mindestens einer Teilantwort zum Client sendet, wobei eine ein Ende der Response kennzeichnende Teilantwort vorgesehen ist,
- der Server, falls er keine Daten zu senden hat, den Response auf den Client-Request bis zu einer Timeout-Zeit verzögert, nach welcher er eine Dummy-Response zum Client sendet, und
- der Client, falls er Daten zu senden hat, diese Daten als neuen Request an den Server sendet, wobei der Server den vorherigen Request mittels einer ein Ende der Response kennzeichnenden Teilantwort beendet und die weitere Server-Client-Kommunikation als Response auf den neuen Request in mindestens einer Teilantwort zum Client gesendet wird.

Die Aufgabe wird ferner durch ein Programm zur Ausführung des genannten Verfahrens sowie durch ein System aus zumindest einem Client und einem Server mit den in Anspruch 7 angegebenen Merkmalen gelöst.

Nach dem Öffnen des Kommunikationskanals durch den Client haben sowohl Client als auch Server die Möglichkeit, unabhängig voneinander - bidirektional - Daten aneinander zu verschicken. Der Server schickt seine Daten als Antwort auf den offenen Request des Clients, der Client schickt seine Daten als neuen Request. Hat der Server keine Daten zu senden, so sendet er nach einer Timeout-Zeit eine Dummy-Response zum Offenhalten des Kanals. Erhält der Server einen neuen Request, so beendet er den alten und sendet eventuell noch zu sendende Daten als Antwort auf den neuen Request. Auf diese Weise ist immer ein und nur ein Request offen, als dessen Antwort der Server Daten an den Client senden kann, so dass somit auch bei auf dem Request/Response-Paradigma basierenden Protokollen eine bidirektionale Kommunikation möglich ist. Des Weiteren benötigt das erfindungsgemäße Verfahren lediglich einen Kommunikationskanal. Da beispielsweise HTTP-Verbindungen in der Regel client- und serverseitig auf 2-4 begrenzt sind, ist eine im Vergleich zum bekannten Verfahren Halbierung der Ressourcen ein großer Gewinn, gerade wenn mehrere logische Verbindungen zu einem oder mehreren Servern aufgebaut werden sollen.

Vorteilhafterweise kann der Client beliebig oft erneut Daten als neuen Request an den Server schicken, während der Server seine Response in mindestens einer Teilantwort an den Client sendet, d.h. der letzte Verfahrensschritt des Anspruchs 1 wird mindestens einmal wiederholt.

In einer vorteilhaften Form der Ausführung des Verfahrens wird die Timeout-Zeit kleiner als 30 Sekunden gewählt. Damit wird erreicht, dass durch die Dummy-Response, die der Server nach dieser Zeit sendet, eine eventuell vorhandene Firewall die Verbindung nicht schließt (das "berühmte" 30-Sekunden-Fenster).

In einer weiteren vorteilhaften Ausführungsform wird ein Wakeup-Paket als neuer Request durch den Client initiiert. Der Server bestätigt diesen durch Senden einer Dummy-Response. Hierdurch wissen beide, Client und Server, dass sie noch "leben".

In einer besonders vorteilhaften Ausführungsform wird als Hypertext-Transfer-Protokoll HTTP/1.1 verwendet. Das HTTP/1.1-Protokoll erlaubt es, mehrere HTTP-Requests über eine TCP/IP-Verbindung zu übertragen (TCP: Transmission Control Protocol, IP: Internet Protocol). Hierbei muss der Request/Response-Mechanismus von HTTP natürlich eingehalten werden. Allerdings bietet HTTP/1.1 die Möglichkeit des Pipelinings. Hierbei sendet der Client über eine TCP/IP-Verbindung mehrere Requests, ohne dabei auf die Antworten der einzelnen Requests zu warten. Der Server muss die Antworten in der Reihenfolge senden, wie die Requests bei ihm eingetroffen sind. Durch Verwendung von Pipelining wird also das Problem umgangen, dass der Client neue Daten senden kann, bevor der Server die komplette Antwort gesendet hat. Durch zusätzlichen Einsatz von Chunked-Data-Encoding ("chunked transfer coding") entfällt das Mitzählen der übertragenen Daten sowie das erneute Etablieren des Kanals, wenn die zu Beginn mitgeteilte Datenmenge übertragen wurde. Ein Ende einer Respone wird dabei durch Senden eines "0-Chunk-Paketes" gekennzeichnet, d.h. durch ein Paket mit Datengröße Null. Pipelining und Chunked-Data-Encoding sind HTTP-Mechanismen, die im RFC 2616 ("Request For Comments") beschrieben sind. Über die Verbindung der beiden HTTP/1.1-Kommunikationsmittel Pipelining und Chunked-Data-Encoding wird ermöglicht, bidirektional, unabhängig voneinander, Daten zu senden und zu empfangen. Die einzige Einschränkung ist, dass die Kommunikation vom Client aufgebaut werden muss, da dieser z.B. in einem NAT- oder PAT-Netz "versteckt" sein kann. (NAT: Network Address Translation, PAT: Port Address Translation.)

Im Folgenden wird die Erfindung anhand der in den Figuren dargestellten Ausführungsbeispiele näher beschrieben und erläutert. Es zeigen:
- FIG 1: eine schematische Darstellung des Client-Server-Systems,
- FIG 2: ein Ablaufdiagramm einer beispielhaften Ausführung des erfindungsgemäßen Verfahrens,
- FIG 3: ein Ablaufdiagramm einer weiteren beispielhaften Ausführung des erfindungsgemäßen Verfahrens.

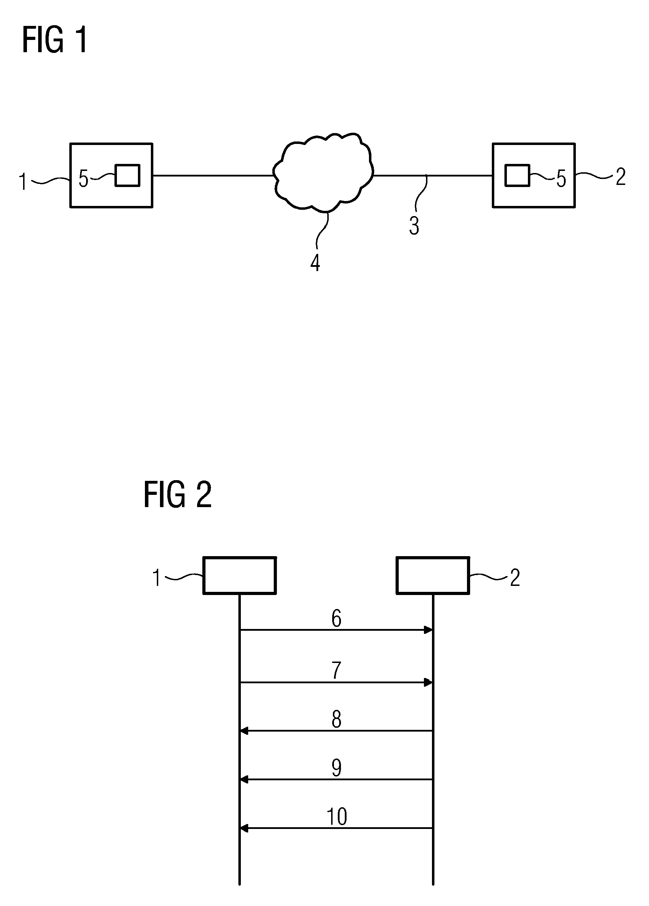

Fig 1 zeigt eine schematische Darstellung eines Clients 1 und eines Servers 2, die jeweils an ein Datennetz 4, wie z.B. das Internet, angeschlossen sind. Über dieses Datennetz 4 wird mittels eines Hypertext-Transfer-Protokolls, das auf dem Request/Response-Paradigma basiert, vom Client 1 durch einen Request an den Server 2 ein Kommunikationskanal 3 geöffnet. Auf diesem kann nun der Server 2 Daten als Response auf den Client-Request an den Client 1 und der Client 1 Daten als neue Requests an den Server 2 senden. Ermöglicht wird dies sowohl client- als auch serverseitig durch ein Programm 5, das zur Ausführung des erfindungsgemäßen Verfahrens vorgesehen ist.

Fig 2 zeigt den Ablauf einer beispielhaften Client-Server-Kommunikation mittels des Hypertext-Transfer-Protokolls HTTP/1.1, das auf dem Request/Response-Paradigma basiert. In einem ersten Schritt baut der Client 1 durch Senden eines ersten Requests 6 eine Verbindung zum Server 2 auf. Durch Senden eines zweiten Requests 7 unter Verwendung des HTTP-Mechanismus Pipelining, da der erste Request 6 noch offen ist, sendet er Daten in Form einer (Produktiv-) Anfrage an den Server 2, der daraufhin den ersten (Aufbau-) Request 6 mit einer Dummy-Response 8 unter Verwendung des HTTP-Mechanismus Chunk-Data-Encoding durch Senden eines 0-Chunk-Paketes beendet. Die weitere Server-Client-Kommunikation läuft über den zweiten Request 7. Der Server 2 sendet eine (Produktiv-) Antwort 9 als Teilantwort des zweiten Requests zum Client 1. Diese Teilantwort 9 wird mittels Chunk-Data-Encoding als Chunk mit der Länge X gesendet. Die weiteren (Produktiv-) Daten werden als weitere Teilantworten als Chunks mit der Länge X bis zum letzten Datenpaket 10, das ein Chunk der Länge X gefolgt von einem Chunk der Länge 0 ist, gesendet.

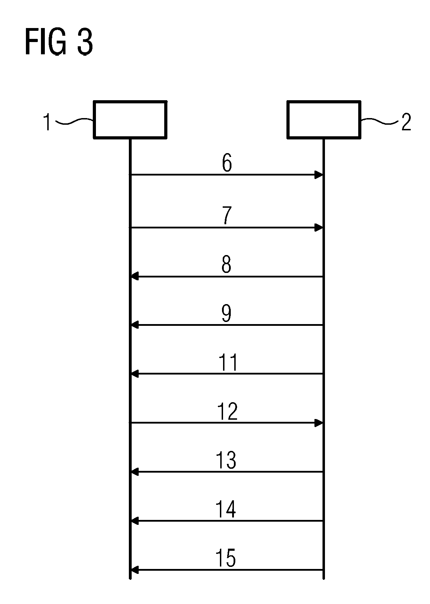

Fig 3 zeigt den Ablauf einer weiteren beispielhaften Client-Server-Kommunikation mittels HTTP/1.1. In einem ersten Schritt baut der Client 1 wiederum durch Senden eines ersten Requests 6 eine Verbindung zum Server 2 auf. Durch Senden eines zweiten Requests 7 unter Verwendung von Pipelining, da der erste Request 6 noch offen ist, sendet er Daten in Form einer (Produktiv-) Anfrage an den Server 2, der daraufhin den ersten (Aufbau-) Request 6 mit einem 0-Chunk-Paket, der Dummy-Response 8, beendet. Die weitere Server-Client-Kommunikation läuft über den zweiten Request 7. Der Server 2 sendet zwei (Produktiv-) Antworten 9, 11 als Teilantworten auf den zweiten Request 7 als Chunks mit der Länge X zum Client 1. Im nächsten Schritt sendet der Client 1 via Pipelining weitere (Produktiv-) Daten mittels eines dritten Requests 12 zum Server 2. Als Folge davon beendet der Server 2 den vorherigen, zweiten, Request 7 durch Senden eines 0-Chunk-Pakets 13 und sendet weitere Daten der ersten (Produktiv-) Anfrage 7 über die dritte HTTP-Response 14. Schließlich sendet der Server 2 Daten der zweiten (Produktiv-) Anfrage 12 mit dem letzten Datenpaket 15, das aus einem Chunk der Länge X gefolgt von einem 0-Chunk-Paket besteht.

Zusammenfassend betrifft die Erfindung ein Verfahren zur bidirektionalen asynchronen Datenkommunikation zwischen einem Client und einem Server über ein Datennetz, insbesondere Internet, mittels eines auf einem Request/Response-Paradigma basierenden Hypertext-Transfer-Protokolls. Aufgabe der Erfindung ist es, unter Zuhilfenahme eines einzigen Kommunikationskanals eine vom Client initiierte Kommunikation zu etablieren, über die beide Partner asynchron bidirektional Daten austauschen können. Diese Aufgabe wird dadurch gelöst, dass, nachdem der Client die Verbindung mittels eines Requests etabliert hat, der Client Daten als weitere Requests zum Server schickt, während der Server Daten als Response auf den letzten Request an den Client schickt. Hat der Server keine Daten zu senden, so sendet er nach einer Timeout-Zeit eine Dummy-Response zum Offenhalten des Kanals. Erhält der Server einen neuen Request, so beendet er den alten und sendet eventuell noch zu sendende Daten als Antwort auf den neuen Request. Auf diese Weise ist immer ein und nur ein Request offen, als dessen Antwort der Server Daten an den Client senden kann, so dass somit auch bei auf dem Request/Response-Paradigma basierenden Protokollen eine bidirektionale Kommunikation auf einem Kanal möglich ist.

## Patentansprüche

1. Verfahren zur bidirektionalen asynchronen Datenkommunikation, die, von einem Client (1) initiiert, zwischen dem Client (1) und einem Server (2) etabliert wird, über ein Datennetz (4), insbesondere Internet, mittels eines auf einem Request/Response-Paradigma basierenden Hypertext-Transfer-Protokolls,
**dadurch gekennzeichnet,**
**dass**
- der Client (1) mittels eines Requests (6) einen Kommunikationskanal (3) aufbaut,
- der Server (2), falls er Daten zu senden hat, diese Daten als Response auf den Client-Request (6) in mindestens einer Teilantwort zum Client (1) sendet, wobei eine ein Ende der Response kennzeichnende Teilantwort vorgesehen ist,
- der Server (2), falls er keine Daten zu senden hat, den Response auf den Client-Request (6) bis zu einer Timeout-Zeit verzögert, nach welcher er eine Dummy-Response zum Client (1) sendet, und
- der Client (1), falls er Daten zu senden hat, diese Daten als neuen Request (7) an den Server (2) sendet, wobei der Server (2) den vorherigen Request (6) mittels einer ein Ende der Response kennzeichnenden Teilantwort (8) beendet und die weitere Server-Client-Kommunikation als Response auf den neuen Request (7) in mindestens einer Teilantwort (9, 10, 11) zum Client (1) gesendet wird.

2. Verfahren nach Anspruch 1,
wobei der Client (1) weitere Daten als neuen Request (12) an den Server (2) sendet, wobei der Server (2) den vorherigen Request (7) mittels einer ein Ende der Response kennzeichnenden Teilantwort (13) beendet und die weitere Server-Client-Kommunikation als Response auf den neuen Request (12) in mindestens einer Teilantwort (14, 15) zum Client (1) gesendet wird.

3. Verfahren nach Anspruch 1 oder 2,
wobei die Timeout-Zeit kleiner als 30 Sekunden gewählt wird.

4. Verfahren nach einem der vorhergehenden Ansprüche,
wobei der Client-Request zum Aufbau des Kommunikationskanals (3) ein Wakeup-Paket ist, das der Server (2) durch Senden einer Dummy-Response bestätigt.

5. Verfahren nach einem der vorhergehenden Ansprüche,
wobei als Hypertext-Transfer-Protokoll HTTP/1.1 verwendet wird.

6. Programm (5) zur bidirektionalen asynchronen Datenkommunikation zwischen einem Client (1) und einem Server (2),
**dadurch gekennzeichnet,**
**dass** das Programm (5) zur Ausführung eines Verfahrens nach einem der Ansprüche 1 bis 5 vorgesehen ist.

7. System aus zumindest einem Client (1) und einem Server (2), wobei Client (1) und Server (2) zur bidirektionalen asynchronen Datenkommunikation, die vom Client (1) initiierbar ist, über ein Datennetz (4), insbesondere Internet, mittels eines auf einem Request/Response-Paradigma basierenden Hypertext-Transfer-Protokolls vorgesehen sind,
**dadurch gekennzeichnet,**
**dass**
- der Client (1) Mittel zum Aufbau eines Kommunikationskanals (3) über einen Request (6) aufweist,
- der Server (2) Mittel zum Senden von Daten als Response auf den Client-Request (6) in mindestens einer Teilantwort zum Client (1) aufweist, wobei eine ein Ende der Response kennzeichnende Teilantwort vorgesehen ist,
- die Server-Response auf den Client-Request (6), falls keine Daten zu senden sind, bis zu einer Timeout-Zeit verzögerbar ist, nach welcher eine Dummy-Response zum Senden an den Client (1) vorgesehen ist, und
- der Client (1) Mittel zum Senden von Daten als neuen Request (7) an den Server (2) aufweist, wobei der vorherige Request (6) mittels einer ein Ende der Response kennzeichnenden Teilantwort (8) vom Server (2) beendbar und die weitere Server-Client-Kommunikation als Response auf den neuen Request in mindestens einer Teilantwort (9, 10, 11) zum Client (1) sendbar ist.

8. System nach Anspruch 7,
wobei die Timeout-Zeit kleiner als 30 Sekunden ist.

9. System nach Anspruch 7 oder 8,
wobei als Client-Request zum Aufbau des Kommunikationskanals (3) ein Wakeup-Paket sendbar ist, das durch eine Dummy-Response als Bestätigung vom Server (2) beantwortbar ist.

10. System nach einem der Ansprüche 7 bis 9,
wobei als Hypertext-Transfer-Protokoll HTTP/1.1 vorgesehen ist.
